# EUROPEAN PATENT APPLICATION

(11) **EP 4 345 011 A1**
(43) Date of publication of application: **03.04.2024**
(21) Application number: 22198791.0
(22) Date of filing: 29.09.2022
(51) Int. Cl.: B64D 45/00

(54) **SHUTDOWN SYSTEM AND METHOD**

(71) Applicant: Airbus Operations GmbH, 21129 Hamburg (DE)
(72) Inventor: Schultz, Sarico, 21129 Hamburg (DE); Lüdtke, Michael, 21129 Hamburg (DE); Berkhahn, Sven-Olaf, 21129 Hamburg (DE)

(57) **Abstract**

The present invention relates to a stolen aircraft shutdown system (10) comprising a processor unit (2), a communications unit (4) configured to receive information relating to a status indicator of an aircraft, the status indicator corresponding to one of a safe value or a stolen value, and configured to provide a status input relating to the value of the status indicator to the processor unit (2), a ground determination unit (6) configured to receive aircraft operational data from an aircraft, the location indicator corresponding to one of a grounded value or an airborne value, and configured to provide a location input relating to the value of the location indicator to the processor unit (2) wherein the processor unit (2) is configured to determine the value of the status indicator based on the status input, and configured to determine the value of the location indicator based on the location input, and is configurable to be in communication with a control system (14) of an aircraft, and configurable to provide immobilisation instructions to the control system (14) of an aircraft to disable at least one aircraft function in the event that the value of the status indicator is determined to be stolen, and the value of the location indicator is determined to be grounded.

## Description

The present invention relates to a stolen aircraft shutdown system and an associated method. Further, it also relates to an aircraft comprising the stolen aircraft shutdown system.

Systems that require a user of a vehicle to identify themselves prior to operation of a vehicle are known. Users that are unable to provide identification, or that provide an invalid identification, are then prevented from using said vehicle. For example US2004/0181327 describes a vehicle security subsystem embedded within an automatic control system for granting secure access to a valid operator and denying access to an invalid operator even if the vehicle is in operation. The security subsystem communicates valid operator conditions to other subsystems through a verification system. If not verified, this system communicates an invalid operator condition to other subsystems to actuate predetermined operational conditions depending on sensors for in-operational or non-operational conditions.

US5479162 describes an anti-theft system that can be retrofitted onto existing aircraft to disable the starter motor of an engine a predetermined time after the aircraft is taken out of service and re-enables starting only after the pilot has provided adequate identification, such as by entering a personal identification number on a cockpit keyboard.

However, these currently known systems have a vulnerability in that they rely on user identification which can be stolen, forged, or even guessed. In such an event, an unauthorised user of an aircraft would be granted full operation of the aircraft, and this could be costly to owners, as well as possibly posing a danger to nearby individuals and the general public.

US2005/0187693 describes a method and control system for a vehicle that includes a processor to reduce the speed of a vehicle in response to vehicle shutdown signal, and may cause the vehicle to stop once the speed has reached a predetermined level. This system concerns vehicle recovery, or events where there is a need to disable the vehicle.

Such methods and control systems are, however, designed for terrestrial vehicles such as cars or trucks. In contrast, an aircraft is a more complex system, is more complex to operate, and is bound by more safety requirements than a terrestrial vehicle. As such known methods and control systems are not appropriate for use in an aircraft, for example because their use may pose a danger to those in and around the aircraft. If an aircraft were to be stolen, for example, the use of such a system may cause the aircraft to become unusable mid-flight, thereby risking an accident and injury to those in the aircraft, as well as on the ground.

In view of the above, it is an object of the present invention to provide an improved aircraft shutdown system that avoids the drawbacks as outlined above.

A first aspect relates to a stolen aircraft shutdown system, comprising a processor unit, a communications unit and a ground determination unit. The communications unit is configured to receive information relating to a status indicator of an aircraft, the status indicator corresponding to one of a safe value or a stolen value, and configured to provide a status input relating to the value of the status indicator to the processor unit, and the ground determination unit is configured to receive aircraft operational data from an aircraft, where the location indicator corresponds to one of a grounded value or an airborne value. The ground determination unit is configured to provide a location input relating to the value of the location indicator to the processor unit. The processor unit is configured to determine the value of the status indicator based on the status input, and configured to determine the value of the location indicator based on the location input, and is configurable to be in communication with a control system of an aircraft, and configurable to provide immobilisation instructions to the control system of an aircraft to disable at least one aircraft function in the event that the value of the status indicator is stolen, and the value of the location indicator is grounded.

In use, the stolen aircraft shutdown system may receive information at the communications unit, for example in the form of a data transmission via wireless or wired signal, and may use this information to determine the status indicator which maybe provided to the processor unit via a status input, or may be determined in the processor unit itself. The ground determination unit receives operational data from the aircraft (for example, via a sensor arrangement of sensors on and/or in the aircraft) and therefore a location indicator of the aircraft is able to be determined based on the operational data. The operational data may be provided to the processor unit via a location input for determination of the location indicator, or the ground determination unit may determine the location indicator and provide this data directly to the processor unit. The processor unit is in communication with a control system of the aircraft, which allows the processor unit a degree of control over the aircraft, for example over the operations of the aircraft. Should the processor unit receive or determine a status indicator value of stolen from the communications unit, and a value of grounded from the ground determination unit, then the processor unit is configured to provide immobilisation instructions to the aircraft, such that the functionality of the aircraft is reduced, as will be described further in the following text. In doing so, an improved system and method for shutdown of an aircraft is provided, which permits an aircraft to be shut down or functionally limited upon receipt of a signal or other data transmission (e.g. by an encrypted USB drive) while simultaneously ensuring that the circumstances in which the aircraft is shut down do not pose a threat or endanger anyone in the aircraft or located on the ground in the vicinity of the aircraft.

The ground determination unit maybe configurable to be in communication with, and receive aircraft operational data from, an aircraft sensor arrangement. The aircraft sensor arrangement may be located wholly or partially in and/or on an aircraft. The aircraft sensor arrangement may be located wholly or partially inside an aircraft. The aircraft sensor arrangement may be located wholly or partially on the exterior of an aircraft. The aircraft sensor arrangement may permit information to be measured that may be received by the ground determination unit. In some examples the measured information may enable the accurate determination of the value of the location indicator, which relates to whether the aircraft is located on the ground or is airborne. Determination of the value of the location indicator may be performed by the ground determination unit, or by the processor unit, as will be described in the following paragraphs.

The aircraft sensor arrangement may be or comprise one or a plurality of sensors. The aircraft sensor arrangement may comprise a plurality of sensors distributed throughout an aircraft. The aircraft sensor arrangement may comprise a sensor located in one, each, or some of an aircraft fuselage, an aircraft wing, an aircraft tail, an aircraft landing gear, an aircraft wheel well, an aircraft engine, or the like. In some examples, the aircraft sensor arrangement may comprise a plurality of sensors located in one, each or some of the aforementioned locations. For example, the aircraft sensor arrangement may comprise one or a plurality of sensors located in the landing gear, an aircraft engine or a plurality of aircraft engines, or the like. The number of sensors on the aircraft sensor arrangement may be selected to enable the ground determination unit to determine the value of the location indicator within a specified timeframe, and to a specified level of accuracy. Having a plurality of sensors in the ground determination unit may permit the sensor arrangement a degree of redundancy, should one or a plurality of sensors become dysfunctional or unresponsive.

The aircraft sensor arrangement may be or comprise one or a plurality of sensors that are also for normal use of operation of an aircraft. For example, the aircraft sensor arrangement may comprise one or a plurality of pre-existing sensors in an aircraft, or standard sensors in an aircraft, that are used to provide information on the operation of an aircraft during normal operation. One sensor in the sensor arrangement may be used primarily by a pilot to determine the ground speed of an aircraft, while another sensor in the sensor arrangement may be used to determine the rotational speed of an engine fan, and yet another sensor in the sensor arrangement may be used to determine the altitude of the aircraft.

The aircraft sensor arrangement may comprise any appropriate type of sensor. For example, the aircraft sensor arrangement may comprise at least one of a motion sensor, an optical sensor and a pressure sensor.

The operational data maybe or comprise a plurality of parameters indicative of the location of an aircraft. The ground determination unit or the processor unit may determine the value of the location indicator to be airborne if the aircraft operational data, or the parameters thereof, are outside an expected range of values. In some examples, the received aircraft operational data, or the parameters thereof, may relate to at least one of landing gear configuration, pressure applied to landing gear, rotational speed of engine fans and aircraft ground speed.

The expected range of values may be provided based on an expected range of values of the parameter or a plurality of parameters indicative of the location or activity of an aircraft. For example, the operational data may comprise a parameter relating to the altitude of an aircraft, which may have an expected value of o, or from o to a small value above o to take into account for small inaccuracies or anomalies that may occur in the sensor arrangement. The expected range of values of the altitude parameter may therefore indicate that the aircraft is physically located on the ground, and therefore grounded. Similarly, a parameter relating to the rotational speed of the engine fans may have an expected value of between o and a maximum value of revolutions per second below which it is known that an aircraft is not provided with enough thrust to fly, or to taxi to a runway, and therefore must be grounded. In the case of the landing gear, operational data may be provided containing a parameter relating to the pressure in a portion of the landing gear, in which case the expected range of values may be any value above a threshold value indicating that weight is being applied to the landing gear and that therefore the aircraft is located on the ground. The operational data may relate to a parameter indicating whether the landing gear is in the extended or contracted position, in which case there would exist an expected value of the parameter indicating that the landing gear is down. The operational data may be considered to be outside of an expected range of values if one parameter indicative of the location of an aircraft falls outside the range of expected values, or is not equal to an expected value, for that parameter. As such, the operational data being outside of a range of values may provide a reliable indication of the value of the location indicator that is based on multiple factors.

It should be noted that although the operational data may be considered to be outside of an expected range of values when one parameter falls outside the expected range of values, or is not equal to an expected value, the system is not limited in this regard. In some examples, two or more parameters may be required to be outside an expected range of expected values, or unequal to an expected value, in order for the operational data to be considered outside an expected range of values. This may be the case when a greater degree of accuracy is desired to establish the value of the location indicator, or if some parameters are at times known to be anomalous values.

The ground determination unit maybe configurable to be in communication with, and receive aircraft operational data from, an onboard computer system. The onboard computer system may be an aircraft onboard computer system. The onboard computer system may provide operational data relating to the functionality of the aircraft or components thereof. For example, the onboard computer system may provide operational data on the functionality of the sensor arrangement, such as the, or each, sensor of the sensor arrangement. The onboard computer system may provide operational data on the level of accuracy of a parameter, which may be based on the functionality of the aircraft or components thereof. For example, the onboard computer system maybe configured or to identify anomalous or abnormal data from the sensor arrangement (e.g. from a sensor of the sensor arrangement) resulting in an anomalous or abnormal parameter value, and may provide further operational data that the parameter value is likely to be inaccurate and/or incorrect. The onboard computer may therefore provide operational data indicating that an identified parameter (or a plurality of identified parameters) should be ignored.

The onboard computer system may provide operational data relating to the current activity of an aircraft. For example the onboard computer system may provide the ground determination unit with data or information relating to the flight phase of an aircraft. The onboard computer system may provide operational data that the aircraft is in a taxiing or climbing flight phase. In some examples, the onboard computer may provide operational data that the aircraft is either in a flight phase associated with being located on the ground, or in a flight phase associated with being airborne. The onboard computer may provide operational data relating to movement of the aircraft, such as the ground speed of the aircraft.

The ground determination unit or the processor unit may determine the value of the location indicator to be airborne in the case that the operational data provided by the onboard computer system indicates a flight phase associated with an aircraft being airborne, and/or any other operational other than those related to ground operation (e.g. a non-ground operation flight phase).

The onboard computer system may be a flight warning computer system.

The ground determination unit or the processor unit may determine the value of the location indicator to be grounded when the provided aircraft operational data is within an expected range of values, and when the flight phase information indicates a ground operation flight phase. In doing so, the ground determination unit or the processor unit may ensure that the stolen aircraft shutdown system may only determine the value of the location indicator to be grounded (and therefore permit the processor unit to send the immobilisation instructions to the control system of an aircraft) when both the operational data is and/or comprises parameters that are within an expected range of values, and when the onboard computer system indicates that the aircraft is in a flight phase associated with ground operation. Otherwise, the ground determination unit or the processor unit may determine the value of the location indicator to be airborne.

In some examples, the ground determination unit or the processor unit may be configurable or configured to determine the value of the location indicator to be grounded if either of 1) the operational data is within an expected range of values; or 2) the onboard computer system indicates a flight phase that is associated with ground operation and/or that the ground speed of the aircraft is equal to o. Otherwise, the ground determination unit or the processor unit may determine the value of the location indicator to be airborne. This may therefore improve safety by permitting the value of the location indicator to be based both on operational data from a sensor arrangement as well as operational data from an onboard computer system. In the case where the location indicator is determined to have a grounded value only when the onboard computer indicates the ground speed to be o, then in order to be considered "grounded" the aircraft must be both located on the ground as well as be stationary. In some examples, the sensor arrangement may additionally or alternatively comprise a sensor for measuring the ground speed of an aircraft.

The communications unit may be configured to receive a signal from an external source, e.g. a source external to an aircraft on which the shutdown system is located. The signal may comprise data relating to the value of the status indicator. The communications unit may be configured to receive the signal and recognise (e.g. determine) the value of the status indicator from the received signal in some examples. Alternatively, the processor unit may be configured to recognise (e.g. determine) the value of the status indicator from the received signal.

The communications unit may be configured to receive a signal from a party having an interest in the aircraft, such as from the owner and/or manufacturer. The communications unit may be configured to receive a signal by any appropriate means, such as wirelessly (e.g. a wireless signal), via a wire, via a multimedia device such as an encrypted USB stick, or the like. As such, the communications unit may be configurable to receive a signal from outside of the aircraft, providing the possibility of activating the stolen aircraft shutdown system without having to be in the aircraft itself.

Signals maybe sent and received securely, so as to prevent the stolen aircraft shutdown system from being hacked, e.g. from receiving instructions from an unauthorised user. For example, signals may be received in an encrypted manner (e.g. wireless or wired signals) that may be unencrypted in the communications unit or processor unit. Signals that do not require to be unencrypted may not be accepted, or may be ignored, for example. In some examples, securely configured and layered available commercial technologies may be used to securely transmit data.

The communications unit may be configured to receive a signal continuously, or intermittently. The communications unit may be configured to receive a signal continually, e.g. intermittently and continually. The communications unit may be configured to receive a signal after a predetermined time interval based on the last signal, for example every second, 30 seconds, minute, hour or the like. The communications unit may be configured to receive a heartbeat signal comprising data relating to the value of the status indicator.

The communications unit maybe configured to receive a signal indefinitely, e.g. continuously and indefinitely, or continually and indefinitely. Having such a signal received indefinitely may enable a user to change the value of the status indicator at any time (e.g. from a safe value to a stolen value, or vice versa).

The communications unit may be configured to receive a signal during a limited and/or predetermined timeframe. For example the communications unit may be configured to receive a signal during daylight or night-time hours, during a period in which it is known that the aircraft may be more likely to be stolen or hijacked, for example during a period of operation in a particular geographic region, or during a period in which the aircraft is known to be located outside of a hangar.

To receive a signal, the communications unit may comprise a receiver, for example for receiving wireless signals.

In some examples, the communications unit may be configured to transmit a request signal requesting a current value of the status indicator. For example, the request signal may be sent to an owner and/or manufacturer to request the current value of the status indicator. The communications unit may then receive a return signal comprising data relating to the value of the status indicator.

The communications unit may be configured to transmit a request signal continually and indefinitely, or continually and during a specified limited timeframe. For example, the request signal may be configured to be sent only during a start period (e.g. an hour) after operation of the aircraft has begun, or when the aircraft is known to be located in a particular area, for example located outside of a hangar, or located in a geographic region in which the aircraft is more likely to be stolen or hijacked.

The communications unit may comprise a transceiver to transmit and receive a signal, such as a wireless signal. The transceiver may therefore be configured to request data relating to the value of the status indicator, and also be configured to receive such data.

Once the communications unit receives data or information that relates to the value of the status indicator, the communications unit provides a status input to the processor unit relating to the value of the status indicator. The status input may simply be the data or information that has been received by the communications unit, when may then be provided to the processor unit, for example in the same or a similar form as it has been received by the communications unit.

In some examples, the communications unit may comprise an integrated memory unit, and optionally an integrated processor. In the case that the communications unit comprises an integrated memory unit, the data most recently received by the communications unit may be stored in the memory unit, for example temporarily stored in the memory unit. Should new data be received by the communications unit, the memory unit may update and/or replace previously held data or information relating to the value of the status indicator with the newly received data. To facilitate operation of the memory unit, incoming data may be assigned an identifier such as a timestamp (which may be allocated by the integrated processor, for example). The identifier may then be used to determine which set of data should be stored in the memory unit, e.g. by making identification of the most recent or current data or information received by the communications unit possible.

Where the communications unit comprises an integrated processor, the integrated processor may be used to determine the value of the status indicator based on the received data or information relating to the status indicator of the aircraft. A status input may then be provided to the processor unit, where the status input is or comprises the determined value of the status indicator. In such examples, the communications unit may be configured to determine the value of the status indicator independently of the processor unit.

In some other examples, for example where the communications unit does not comprise an integrated processor, the status input may be the received data or information relating to the status indicator of the aircraft, and determination of the value of the status indicator may be carried out by the processor unit.

The ground determination unit may comprise an integrated memory unit and/or an integrated processor. The memory unit may be used to store operational data received from an aircraft, for example the most recently received data received from the sensor arrangement (e.g. from the or each sensor of the sensor arrangement) and/or from the onboard computer system. To facilitate operation of the memory unit, incoming data may be assigned an identifier such as a timestamp (which may be allocated by the integrated processor, for example). The identifier may then be used to determine which set of data should be stored in the memory unit, e.g. by making identification of the most recent or current value of the status indictor possible.

Where the ground determination unit comprises an integrated processor, the ground determination unit may be configured to determine the value of the location indicator independently of the processor unit through use of the integrated processor. In this circumstance, the location input provided to the processor unit may be or comprise the determined value of the location indicator.

Alternatively, the ground determination unit may receive operational data and the determination of the value of the location indicator may be carried out by the processor unit. In this example, the location input may be or comprise the operational data in the same or a similar form as it was received. For example, the ground determination unit maybe configured to provide the processor unit with the location input comprising information received from, for example, the sensor arrangement and/or the onboard computer system, and then the value of the location indicator may be determined by the processor unit based on the provided location input.

The processor unit may comprise an integrated memory unit. The integrated memory unit may store data on the status indicator and the location indicator. For example, the memory unit may store data relating to the current or most up-to-date known value of the status indicator and the location indicator and/or relating to the current or most up-to-date location input and status input provided to the processor unit. Data stored in the integrated memory unit maybe allocated an identifier such as a timestamp to enable identification of, for example, the current value of the status indicator or location indicator, or current or most up-to-date status input or location input. The identifier (e.g. the time stamp) may be provided by the processor unit, or may be provided by the communications unit and/or ground determination unit in cases where the communications unit and/or the ground determination unit comprise an integrated processor.

The value of the status indicator may be a safe value or a stolen value. The value of the location indicator may be a grounded or airborne value. In the case where the processor unit determines the value of the status indicator to be stolen and the value of the location indicator to be grounded (e.g. because the processor unit receives data or information in the status input and location input enabling determination of the value of the status indicator and location indicator, or because the processor unit receives the value of the status indicator and location indicator in the respective status input and location input), the processor unit is configurable to provide immobilisation instructions to the control system of an aircraft. The immobilisation instructions disable at least one aircraft function, and may disable a plurality of aircraft functions.

In some examples, the aircraft function to be disabled may be at least one of the use of cockpit controls, use of aircraft wing slats and/or flaps, the sue of aircraft engine steering and the use of fly-by-wire systems, although it should be noted that the function or functions to be disabled are not limited to these functions, and a user may configure the processor unit to provide immobilisation instructions to enable other aircraft functions.

The processor unit may provide the immobilisation instructions to the aircraft control system such that the aircraft is shutdown for as long as the status indicator (e.g. the current value of the status indicator) remains as stolen.

Should the value of the status indicator change to safe, the processor unit may be configured to issue reactivation instructions to the control system to restore functionality to any disabled aircraft functions.

In some examples, the immobilisation instructions may comprise a plurality of sets of instructions. For example, the immobilisation instructions may comprise a first set and a second set of instructions. In this example, the first set of instructions, when provided to the control system of an aircraft, may function to disable a first function or set of functions of an aircraft, while the second set of instructions may function to disable a second function or second set of functions. The processor unit may provide the first set of immobilisation instructions to the aircraft control system immediately upon the status indicator having a stolen value and the location indicator having a grounded value. Then, after a predetermined period of time and provided there is no change in the status or location indicator, the processor unit may provide the second set of immobilisation instructions. A further set or further sets of immobilisation instructions may be sent to the aircraft control system after a further predetermined period of time.

The first set of immobilisation instructions may function to disable functions associated with comfort of the aircraft, such as illumination of the aircraft cabin, while a second set of immobilisation instructions may function to disable more critical functions such as the starter motor for the engine. As such, the first set of instructions may function as a deterrent or to provide an indication to a user that the aircraft is equipped with a shutdown system, while a second or further set of immobilisation instructions may function to prevent take-off or motion of the aircraft, should the first set of immobilisation instructions. As such, the safety of the shutdown system may be improved by providing a time window in which a stolen aircraft may be vacated without having to shut down or disable any flight critical functions.

A second aspect of the present invention relates to an aircraft comprising the stolen aircraft shutdown system according to any of the previously described embodiments.

A third aspect of the present invention relates to a method for shutting down a stolen aircraft. The method comprises transmitting information relating to an aircraft status indicator to an aircraft, the status indicator corresponding to one of a safe value or a stolen value. The method further comprises receiving the transmitted information at a communications unit of the aircraft, receiving aircraft operational data relating to an aircraft location indicator from an aircraft at a ground determination unit of the aircraft, the location indicator corresponding to one of a grounded value or an airborne value, providing a status input relating to the value of the status indicator to a processor unit of the aircraft, providing a location input relating to the value of the location indicator to the processor unit, determining the value of the status indicator based on the status input and the value of the location indicator based on the location input, and communicating immobilisation instructions to the control system of the aircraft from the processor unit to disable at least one aircraft function when the status indicator is determined to have a value of stolen and a location indicator is determined to have a value of grounded.

In some examples, the method may comprise storing a most recently determined status indicator value as a current status indicator value, and a most recently determined location indicator value as a current location indicator value, and communicating the immobilisation instructions to the control system of the aircraft when the current status indicator value is stolen, and the current location indicator value is grounded. In doing so, only the most recently determined location and status indicator may be taken into account when determining whether the processor unit should send immobilisation instructions to the control system of an aircraft.

In the following, the invention will be described further with regard to the exemplary embodiment shown in the drawings, wherein
- Figure 1: is a schematic illustration of a stolen aircraft shutdown system.
- Figure 2: illustrates an aircraft comprising a stolen aircraft shutdown system.

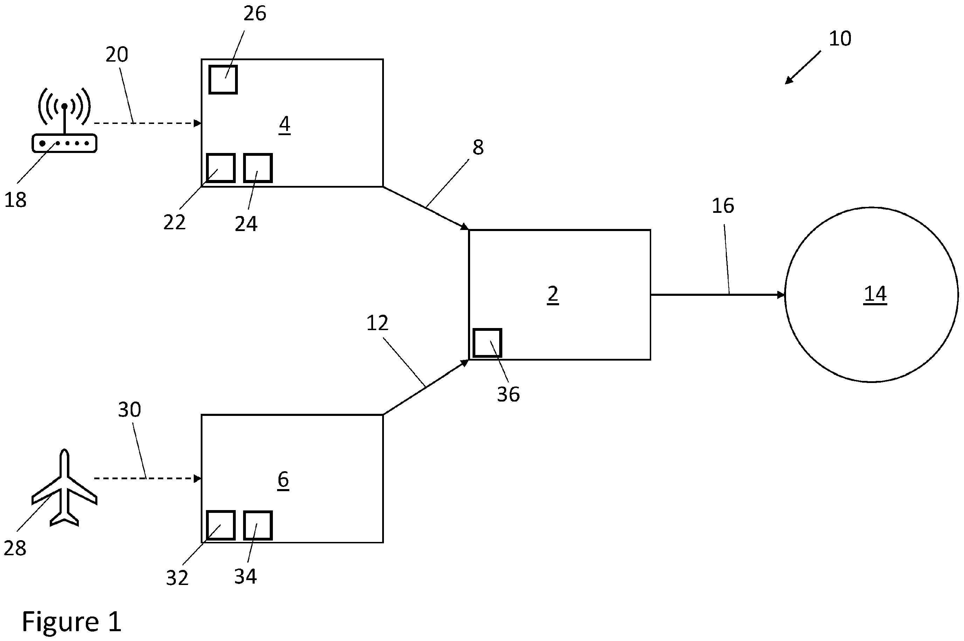

The schematic illustration of the stolen aircraft shutdown system 10 of Figure 1 shows that the system 10 comprises a processor unit 2, a communications unit 4 and a ground determination unit 6. As illustrated both the communications unit 4 and the ground determination unit 6 are in communication with the processor unit 2. Communication between the processor unit 2 and both the communications unit 4 and the ground determination unit 6 may be by any appropriate means, such as by a wired connection. A connection between the processor unit 2 and the communications unit 4 is illustrated by the arrow having reference numeral 8, while a connection between the processor unit 2 and the ground determination unit 6 is illustrated by arrow having reference numeral 12. The processor unit 2 is configured to provide instructions to the control system 14 of an aircraft. Instructions may be provided by any appropriate means such as via a wire or wirelessly. The connection between the processor unit 4 and the control system 14 is illustrated by arrow 16.

The communications unit 4 is configured to receive data or information from source 18. The source 18 may be controlled by a third party located external to the aircraft on which the system 10 is located, for example the source 18 may be controlled by an owner or manufacturer of the aircraft. In Figure 1, the source 18 is illustrated as providing information to the system 10 wirelessly, although it should be noted that this example is not intended to be limiting, and the source 18 may provide information in any appropriate way, such as via wired communication, or on a multimedia device such as an encrypted USB stick. Transmission of data or information from the source 18 is illustrated by arrow 20.

Data or information may be transmitted from the source 18 may be in a continuous manner, such as via a heartbeat signal. The source 18 may be configured to transmit data to the communications unit 4 indefinitely, or within a desired time period (e.g. within a limited timeframe). For example the source 18 may transmit data when the use of an aircraft may make it more likely to be stolen, such as when it is located in a particular geographical region, or even simply when the aircraft is known to be located outside of a hangar.

Data may be transmitted to the communications unit 4 by secure means such as via a secure channel to prevent hacking of the system 10 and/or operation by unauthorised users. The transmitted data may be encrypted, and the communications unit 4 or the processor unit 2 may be configured to ignore data that is received and is not encrypted using an expected encryption key.

The source 18 may transmit data relating to the status of the aircraft on which the system 10 is located. For example, the source 18 may transmit data identifying the aircraft as safe, or identifying the aircraft as stolen. The transmitted data is then received by the communications unit 4, and may then be used to provide a status input relating to the status of the aircraft to the processor unit 2.

The communications unit 4 comprises a receiver 26 for receiving information from the source 18. In some examples the receiver 26 may additionally comprise the ability to transmit data (i.e. the receiver 26 may be more accurately described as a transceiver), and the transceiver 26 may transmit data, such as a request for update, to the source 18, prompting the source to provide further information to the communications unit 4 relating to the status indicator. Data may be transmitted continually and indefinitely, or continually and within a limited time frame to the source 18, requesting further information relating to the status indicator.

In this example, the data received by the communications unit 4 is processed and may optionally be decoded/unencrypted by the communications unit 4. Here, the communications unit 4 comprises an integrated memory unit 22 and an integrated processor 24. The integrated processor 24 may be used to process the data received from the source 18, to thereby produce a value of a status indicator e.g. a stolen value or a safe value. At least one of the data received from the source 18 or the value of the status indicator produced by the processor 24 may be stored in the integrated memory unit 22. The received data or the processed value may be stored as the most up-to-date data set or processed value, replacing any previously stored in the memory unit 22, thereby assisting to ensure that the system is not operated based on out-of-date data.

In some examples, for example those in which the communications unit 4 does not comprise a processor 24, the data received from the source 18 may be passed directly to the processor unit 2, where the received data may be processed to provide a value of the status indicator.

The communications unit 4 provides information to the processor unit 2 in the form of a status input via channel 8. Depending on where the received data is processed, the status input may be or comprise the received data, or the value of the status indicator. In examples where the received data is processed in the communications unit 4, the status input may be or comprise the value of the status indicator, whereas in examples where the received data is processed in the processor unit 2, the status input may be or comprise the received data in the same or a similar form as it was received by the communications unit 4.

The ground determination unit 6 is configured to receive aircraft operational data from an aircraft 28. The aircraft operational data may be received via any appropriate connection, illustrated by a channel having reference numeral 30 in Figure 1, which may be by wired or wireless connection.

The ground determination unit 6 may receive operational data from a sensor arrangement (not illustrated), which may be at least partially, or wholly, located on the aircraft 28. The sensor arrangement may comprise at least one, or a plurality of, sensors, which may be used to generate the operational data. The sensor arrangement may be configured by a user to provide any desired information. For example, the sensor arrangement may be or comprise at least one of motion sensor, an optical sensor and/or a pressure sensor. The sensor arrangement may measure, for example, the rotational speed of the engine fans, the pressure being applied to the landing gear, whether the landing gear is located in the wheel well or outside the wheel well, or the like. The sensor arrangement may provide this data to the ground determination unit 6, for example in the form of a number of parameters, via channel 30. The provided data may assist or enable determination of the location indicator.

The ground determination unit 6 may receive operational data from an onboard computer system (not illustrated) on an aircraft. The onboard computer system may be, for example, the flight warning computer. The onboard computer system in this example is capable of providing operational data relating to the flight phase of an aircraft, as well as the ground speed of the aircraft. It should be noted that an onboard computer system may be used or configured to provide operational data in other forms or comprising other parameters.

As illustrated in Figure 1, the ground determination unit 6 may comprise an integrated memory unit 32 and integrated processor 34. Similar to the case with the communications unit 4, the integrated memory 32 may be used to store a most up-to-date or current set of operational data received from the aircraft 28, and/or may be used to store a most up-to-date or current value of the location indicator.

Where the ground determination unit 6 comprises an integrated processor 34 (such as in the example of Figure 1), the integrated processor 34 may be used to process the operational data received from the aircraft 28 to provide a value of the location indicator, e.g. grounded or airborne. In examples where the ground determination unit 6 does not comprise an integrated processor 34, the operational data may be sent to the processor unit 2 via connection 12, and may be processed in the processor unit, where a value of the location indicator may be determined.

The value of the location indicator is determined based on the operational data received from the aircraft. The operational data may comprise an expected set of values that indicate that the aircraft 28 is grounded, such as the rotational speed of the engine fans being below a level that would enable flight, and the altitude of the aircraft being o. Should the operational data fall outside of this expected range of values, the location indicator would be determined by the ground determination unit 6 or the processor unit 2 to be airborne. Should the operational data fall within the expected range of values, the location indicator would be determined to be grounded.

In some examples, the ground determination unit 6 and/or the processor unit 2 may be configured to determine the value of the location indicator to be grounded only when the ground speed of the aircraft is o. In this case, in order for the aircraft 18 to be considered grounded, the aircraft would have to be located on the ground, as well as be stationary.

The ground determination unit 6 is configured to provide a location input via channel 12 to the processor unit 2. Where the ground determination unit 6 comprises an integrated processor 34, such as in this example, the value of the location indicator may be calculated in the ground determination unit 6 and therefore the location input may be or comprise the value of the location indicator. Where the ground determination unit 6 does not comprise an integrated processor 34, the location input comprises the operational data received from the aircraft 28, which may be in the same or a similar form as it was received.

The processor unit 2 receives the status input and the location input from the communications unit 4 and the ground determination unit 6, respectively. If necessary (e.g. if not already done in the respective communications unit 4 and ground determination unit 6), the processor unit 2 is then able to determine the value of the status indicator and the location indicator. The processor unit 2, in this example, then stores the most up-to-date, or current, value of the status indicator and the location indicator in an integrated memory unit 36. To facilitate storage of current values, each value may be assigned a timestamp based on when the value was determined by the processor unit 2, or the integrated processor 24, 34, or alternatively based on when the data was received by the relevant communications unit 4 or ground determination unit 6.

The processor unit 2 is configured to send immobilisation instructions to the control system 14 of an aircraft in the case where the current value of the status indicator is stolen, and the current value of the location indicator is grounded. In other cases, such as when the status indicator is equal to safe and/or the location indicator is equal to airborne, no immobilisation instructions are sent.

The immobilisation instructions are sent via connection 16, and serve to disable at least one functionality of the aircraft, thereby causing shutdown of the aircraft by making it unable to fly or move. For example, the immobilisation instructions may disable fully or partially the use of cockpit controls, the use of aircraft wing slats and/or flaps, the use of aircraft engine steering and/or the use of aircraft fly-by-wire systems. The immobilisation instructions may be delivered to cause a graduated shutdown of aircraft features. For example, the immobilisation instructions may at first cause shutdown of comfort-related features, such as illumination within the cabin, which may function as a warning to an operator that the aircraft is equipped with a shutdown system. After a predetermined period of time, should the status indicator value remain as stolen, then immobilisation instructions will be changed to fully or partially disable further aircraft functionalities, for example engine startup or other flight-critical functions.

Since an operator such as the owner or manufacturer is able to change the value of the status indictor to stolen by changing the transmission at the source 18, the operator may change the value to stolen when they have knowledge that an aircraft has been stolen, or in some examples even as a pre-emptive measure in case they believe the aircraft may be likely to be stolen. If the operator becomes aware that the aircraft is no longer considered as stolen, or at risk of being stolen, they may change the value of the status indicator to safe. At this point, reactivation instructions may be sent to the control system 14 to reenable any fully or partially disabled functionalities.

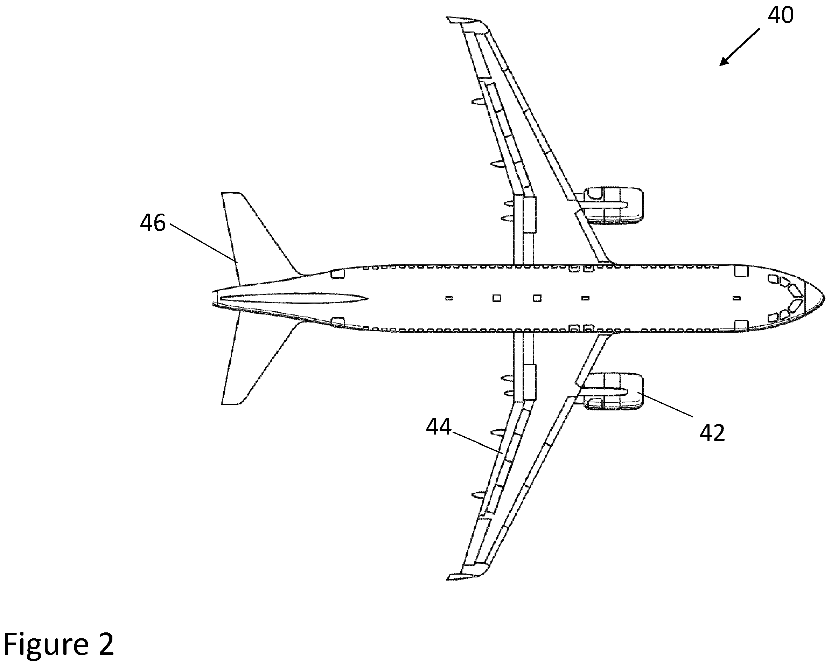

Figure 2 illustrates an aircraft 40 that comprises a stolen aircraft shutdown system, as described in relation to Figure 1. As illustrated the aircraft 40 comprises engines 42, wings 44 and a tail section 46, all of which comprise functionality that may be fully or partially disabled by the shutdown system. Further features may be described, for example that are not visible in Figure 2, such as an onboard computer system, landing gear, or the like, that also may be fully or partially disabled by the stolen aircraft shutdown system.

## Claims

1. A stolen aircraft shutdown system (10), comprising:
a processor unit (2);
a communications unit (4) configured to receive information relating to a status indicator of an aircraft, the status indicator corresponding to one of a safe value or a stolen value, and configured to provide a status input relating to the value of the status indicator to the processor unit (2);
a ground determination unit (6) configured to receive aircraft operational data from an aircraft, the location indicator corresponding to one of a grounded value or an airborne value,
and configured to provide a location input relating to the value of the location indicator to the processor unit (2);
wherein the processor unit (2) is configured to determine the value of the status indicator based on the status input, and configured to determine the value of the location indicator based on the location input, and is configurable to be in communication with a control system (14) of an aircraft, and configurable to provide immobilisation instructions to the control system (14) of an aircraft to disable at least one aircraft function in the event that the value of the status indicator is determined to be stolen, and the value of the location indicator is determined to be grounded.

2. The stolen aircraft shutdown system (10) according to claim 1, wherein the ground determination unit (6) is configurable to be in communication with, and receive aircraft operational data from, an aircraft sensor arrangement comprising at least one of a motion sensor, an optical sensor and a pressure sensor.

3. The stolen aircraft shutdown system (10) according to claim 1 or 2, wherein the value of the location indicator is determined to be airborne if the aircraft operational data is outside an expected range of values.

4. The stolen aircraft shutdown system (10) according to any preceding claim, wherein the received aircraft operational data relates to at least one of landing gear configuration, pressure applied to landing gear, rotational speed of engine fans and aircraft ground speed.

5. The stolen aircraft shutdown system (10) according to any preceding claim, wherein the ground determination unit (6) is configurable to be in communication with, and receive aircraft operational data from, an onboard computer system.

6. The stolen aircraft shutdown system (10) according to claim 5, wherein the onboard computer system is a flight warning computer system and the aircraft operational data comprises flight phase information.

7. The stolen aircraft shutdown system (10) according to claim 6, wherein the value of the location indicator is determined to be airborne when the flight phase information indicates a non-ground operation flight phase.

8. The stolen aircraft shutdown system (10) according to claim 6 or 7, wherein the value of the location indicator is determined to be grounded when the aircraft operational data is within an expected range of values, and when the flight phase information indicates a ground operation flight phase.

9. The stolen aircraft shutdown system (10) according to any preceding claim, wherein the communications unit (4) is configured to receive a heartbeat signal comprising the status indicator.

10. The stolen aircraft shutdown system (10) according to claim 9, wherein the communications unit (4) is configured to receive information comprising a status indicator only during a certain time interval.

11. The stolen aircraft shutdown system (10) according to any preceding claim, wherein the communications unit (4) comprises a transceiver (26) and is configured to request information relating to a status indicator.

12. The stolen aircraft shutdown system (10) according to any preceding claim, wherein the at least one aircraft function is use of cockpit controls, use of aircraft wing slats and/or flaps, use of aircraft engine steering and use of aircraft fly-by-wire systems.

13. An aircraft comprising the stolen aircraft shutdown system (10) according to any preceding claim.

14. A method for shutting down a stolen aircraft, comprising:
transmitting information relating to an aircraft status indicator to an aircraft, the status indicator corresponding to one of a safe value or a stolen value;
receiving the transmitted information at a communications unit (4) of the aircraft;
receiving aircraft operational data relating to an aircraft location indicator from an aircraft at a ground determination unit (6) of the aircraft, the location indicator corresponding to one of a grounded value or an airborne value;
providing a status input relating to the value of the status indicator to a processor unit (2) of the aircraft;
providing a location input relating to the value of the location indicator to the processor unit (2);
determining the value of the status indicator based on the status input, and the value of the location indicator based on the location input in the processor unit (2), and
communicating immobilisation instructions to a control system (14) of the aircraft from the processor unit (2) to disable at least one aircraft function when the status indicator is determined to have a value of stolen and a location indicator is determined to have a value of grounded.

15. The method according to claim 14, comprising storing a most recently determined status indicator value as a current status indicator value, and a most recently determined location indicator value as a current location indicator value, and communicating the immobilisation instructions to the control system (14) of the aircraft when the current status indicator value is stolen, and the current location indicator value is grounded.
